# NEUE EUROPÄISCHE PATENTSCHRIFT

(11) **EP 0 570 012 B2**
(45) Veröffentlichungstag und Bekanntmachung des Hinweises auf die Entscheidung über den Einspruch: **16.06.2004**
(45) Hinweis auf die Patenterteilung: 09.08.2000
(21) Anmeldenummer: 93107911.5
(22) Anmeldetag: 14.05.1993
(51) Int. Cl.: C04B 28/18, E04B 1/76

(54) **Wärmedämmung für Gebäude**
Heat insulation for buildings
Isolation thermique pour bâtiments

(30) Priorität: 15.05.1992 DE 4216204
(43) Veröffentlichungstag der Anmeldung: 18.11.1993
(73) Patentinhaber: Haug, Rainer, W-7000 Stuttgart 1 (DE)
(72) Erfinder: Haug, Rainer, W-7000 Stuttgart 1 (DE)
(74) Vertreter: Klunker . Schmitt-Nilson . Hirsch

(56) Entgegenhaltungen:
- EP-A- 0 069 095
- EP-A- 0 170 801
- EP-A- 0 191 144
- EP-A- 0 211 194
- DE-A- 3 202 960
- DE-A- 3 429 251
- DE-A- 3 816 686
- FR-A- 2 601 404
- US-A- 3 608 261
- CHEMICAL ABSTRACTS, vol. 92, no. 26, 30. Juni 1980, Columbus, Ohio, US; abstract no. 219978h, M. SWIDERSKI ET AL 'Insulation materials' Seite 282 & PL-B-103 994 (WYZSZA SZKOLA INZYNIERSKA ET AL)

## Beschreibung

Die Erfindung bezieht sich auf eine Poren enthaltende Wärmedämmplatte, die durch Einbringen einer bildsamen Materialmasse, die Kalkbindemittel, Siliciumdioxid, ggf. porösen Zuschlag, ggf. Zusätze und Wasser, enthält, in eine Form hergestellt ist. Eine derartige Platte ist aus der EP-A-0 170 801 bekannt.

Konkret wird in der EP-A-0 170 801 beschrieben, daß die Herstellung von feuerbeständigen, maßgenauen Calciumsilikat-Formteilen folgendermaßen erfolgt: Man dispergiert Calciumhydroxid und eine Kieselsäure liefernde Verbindung im Molverhältnis Ca(OH)₂ zu SiO₂ von 1:1 1 bis 1:1,5 in Wasser und setzt diese Mischung in einem Autoklaven um und erzeugt dadurch ein Xonotlit-Gel; danach wird das Xonotlit-Gel mit Perlit und ggf. mit die Festigkeit erhöhenden Zuschlagsstoffen vermischt, in Plattenform gepreßt, getrocknet und ggf. getempert.

Demgegenüber ist die erfindungsgemäße Wärmedämmplatte dadurch gekennzeichnet,
(a) daß die bildsame Materialmasse folgende Herstellungsausgangszusammensetzung hat:
   15 bis 25 Masse - % Kalkbindemittel, bereitgestellt durch gelöschten Kalk und/oder gebrannten Kalk,
   50 bis 70 Masse - % Siliciumdioxid,
   0 bis 10 Masse - % poröser Zuschlag,
   0 bis 2 Masse - % Zusätze,
   Rest Wasser;
(b) daß die bildsame Materialmasse ohne Zwischenstufe in die Form eingebracht und unter Wärme- und Druckeinwirkung zum Erhärten gebracht worden ist;
(c) und daß die Wärmedämmplatte entweder ein in der bildsamen Materialmasse enthaltenes Wasserabweismittel und/oder ein oberflächenseitig aufgebrachtes Wasserabweismittel aufweist.

Aus der EP-A-0 069 095 ist eine poröse Wärmedämmplatte bekannt, deren Herstellungsausgangszusammensetzung - bezogen auf die trockenen Bestandteile - 15 bis 50% hydraulisches Bindemittel, 10 bis 70% silikatisches Material, 5 bis 30% poröser Leichtzuschlag, und 0,1 bis 0,5% Porenbildungsmittel ist; der Rest ist Wasser. Die bildsame Masse wird unter Wärme- und Druckeinwirkung zum Erhärten gebracht. Der Leichtzuschlag ist mit einem Wasserabweismittel behandelt oder die bildsame Masse enthält Wasserabweismittel.

Aus der FR-A-2 601 404 ist eine Wärmedämmplatte bekannt, deren tragende Schicht aus Beton mit einem porösen Zuschlag besteht.

Alternativ ausgedrückt besteht die Wärmedämmplatte, abgesehen von dem Wasserabweismittel, im wesentlichen aus Calciumsilikathydrat, Siliciumdioxid, ggf. einem porösen Zuschlag und ggf. Zusätzen. Der Calciumsilikathydrat-Bestandteil beruht vorzugsweise auf dem Vorhandensein von gelöschtem Kalk, Siliciumdioxid und Wasser im Herstellungs-Ausgangsmaterial. Man kann aber auch mit einem Anteil gebranntem Kalk arbeiten, der während der Herstellung durch Wasseraufnahme hydratisiert wird. Der Siliciumdioxid-Bestandteil der erfindungsgemäßen Wärmedämmplatte besteht vorzugsweise im wesentlichen aus Quarzsand und/oder amorpher Kieselsäure.

Als die im Patentanspruch 1 angesprochenen Zusätze kommen in erster Linie das im Patentanspruch 1, Merkmal (c) angegeben Wasserabweismittel und/oder das nachfolgend noch zu erläuternde Porenbildungsmittel in Betracht. Wenn man mit oberflächenseitig aufgebrachtem Wasserabweismittel arbeitet, kann man die Wärmedämmplatten an ihren Oberflächen an der Baustelle z. B. durch Anstreichen oder Aufsprühen mit einem Wasserabweismittel versehen.

Die vorzugsweise eigenstabile Wärmedämmplatte ist außer für Außenwärmedämmung auch für andere Wärmedämmaufgaben in Gebäuden einsetzbar, z. B. für die Innenwärmedämmung von Außenwänden, für die Wärmedämmung von Zwischenwänden und das wärmedämmende Ausfachen von Fachwerkgebäuden. Ferner läßt sich die erfindungsgemäße Wärmedämmplatte für das äußere oder das innere Wärmedämmen von Dächern bzw. Dachschrägen einsetzen.

Die erfindungsgemäßen Wärmedämmplatten bestehen aus mineralischem Material, welches außer gute Wärmedämmung insbesondere die Vorteile guter Verarbeitbarkeit und Unbrennbarkeit mit sich bringt. Im Vergleich zu Wärmedämmplatten aus geschäumtem Kunststoff, insbesondere aus geschäumtem Polystyrol oder geschäumtem Polyurethan, sind die erfindungsgemäßen Wärmedämmplatten unter Feuerschutzgesichtspunkten günstiger, weil sie im Brandfall keine giftigen Gase erzeugen und nicht schmelzend von der Wand ablaufen. Daß die erfindungsgemäßen Wärmedämmplatten - gemessen an gleicher Wärmedämmfähigkeit - schwerer sind als Wärmedämmungen aus geschäumtem Kunststoff oder aus Fasermaterial, stellt auch bauphysikalisch einen Vorteil dar, weil hierdurch das Wärmespeichervermögen der Gebäudewand insgesamt zunimmt. Die Wärmedämmplatten lassen sich problemlos, analog zu Holz, sägen, fräsen, nageln, dübeln, schrauben. Ihre Feuerbeständigkeit fällt in die Baustoffklasse A2 (DIN 4102), sie sind afterungsbeständig, verrottungsfest und umfassend umweltfreundlich, da sie aus natürlichen Materialien bestehen. Ferner sind die Wärmedämmplatten maßbeständig, da sie nicht schwinden oder schrumpfen, wodurch eine auf Dauer praktisch fugenlose Wärmedämmung gewährleistet ist.

Zur Erreichung eines möglichst guten Wärmedämmungsvermögens, aber auch einer guten Handhabbarkeit, weisen die Wärmedämmplatten vorzugsweise ein spezifisches Gewicht unter 250 kg/m³ auf. Stärker bevorzugt ist ein spezifisches Gewicht unter 220 kg/m³, noch stärker bevorzugt unter 200 kg/m³. Die Einhaltung der genannten Obergrenzen des spezifischen Gewichts wird hauptsächlich durch den Volumenanteil der enthaltenen Poren gesteuert.

Vorzugsweise haben die Wärmedämmplatten einen Wärmeleitfähigkeitsmeßwert unter 0,050 W/mK. Besonders bevorzugt ist ein Wärmeleitfähigkeitsmeßwert unter 0,045 W/mK, ganz besonders unter 0,040 W/mK. Auch die Wärmeleitfähigkeit der Wärmedämmplatten hängt in erster Linie von den enthaltenen Poren ab, konkret von dem Volumenanteil, den die Poren in den Wärmedämmplatten einnehmen, und der Größe sowie der Verteilung der Poren. Vorstehend wurde der Begriff "Wärmeleitfähigkeitsmeßwert" verwendet, um zu verdeutlichen, daß es sich um die an einer trockenen Wärmedämmplattenprobe gemessene Wärmeleitfähigkeit handelt.

Eine besonders bevorzugte Möglichkeit zum Erzeugen von Poren in den Wärmedämmplatten besteht darin, daß man im nassen Herstellungsausgangsmaterial enthaltenes Wasser während des Erhärtens zum Verdampfen bringt. Dies führt zu feinen, gleichmäßig verteilten Poren. Eine weitere bevorzugte Möglichkeit, die alternativ oder in Kombination mit der soeben geschilderten Möglichkeit eingesetzt werden kann, besteht darin, daß bereits im Herstellungsausgangsmaterial mit Hilfe eines Porenbildungsmittels Poren gebildet werden, die dann in den fertigen Wärmedämmplatten enthalten sind. Besonders geeignete Porenbildungsmittel sind Tenside, Aluminiumpulver und Peroxoverbindungen.

Ferner ist es möglich, dadurch Poren in die Wärmedämmplatten einzubringen, daß man in dem Herstellungsausgangsmaterial einen porösen Zuschlag vorsieht. Besonders geeignete poröse Zuschläge sind einzeln oder in Kombination: Bims, geblähtes Perlit, Blähton, Blähglimmer, Blähglas, geschäumtes Polystyrol. Es wird darauf hingewiesen, daß die beschriebenen Möglichkeiten zum Einbringen von Poren in die Wärmedämmplatten jeweils für sich oder in beliebigen Kombinationen eingesetzt werden können.

Im Herstellungsausgangsmaterial der Wärmedämmplatten vorhandenes Wasserabweismittel soll den fertigen Wärmedämmplatten wasserabweisende Eigenschaften verleihen, wobei die Wärmedämmplatten aber nach wie vor wasserdampfdurchlässig bleiben sollen. Besonders geeignete Wasserabweismittel sind die folgenden Mittel einzeln oder in Kombination: Stearate, Oleate, Palmitate, Laurate, Behenate, Silikone. Im Zusammenhang mit den Stearaten seien Zinkstearat und Aluminiumstearat besonders genannt.

Die erfindungsgemäße Wärmedämmplatte läßt sich als großformatige Platte fertigen und einsetzen, insbesondere in einer Größe von mehr als 1 m x 0,4 m z. B. im Format 1,25 m x 0,5 m. Der bevorzugte Bereich der Dicke der Wärmedämmplatte ist 20 bis 100 mm, wobei der Dickenbereich von 30 bis 50 mm besonders bevorzugt ist.

Weiterer Gegenstand der Erfindung ist eine Wärmedämmung für Gebäude, dadurch gekennzeichnet, daß sie mehrere nebeneinander an angebrachte, erfindungsgemäße Wärmedämmplatten aufweist.

Im Fall einer außenseitigen Wärmedämmung ist eine bevorzugte Wärmedämmung zusätzlich gekennzeichnet durch mindestens eine Putzschicht, die entweder unmittelbar oder unter Vorhandensein mindestens einer Zwischenlage außenseitig auf die Wärmedämmplatten aufgebracht ist, wobei die Putzschicht aus einem mineralischen Putzmaterial besteht, das ein Porenbildungsmittel und/oder einen porösen Zuschlag sowie ein Wasserabweismittel enthält.

Die Putzschicht besteht aus einem speziellen Putzmaterial, welches die Wärmedämmplatten kapillarwasserdicht abschließt. Auf diese Weise ist sichergestellt, daß die Wärmedämmplatten, die ja an sich wegen ihres porösen Aufbaus zur Wasseraufnahme neigen (wodurch sich die Wärmeleitfähigkeit erheblich vergrößern würde), zuverlässig trocken gehalten werden. Insgesamt ist jedoch die Wärmedämmung, insbesondere wegen des porösen Aufbaus der Wärmedämmplatten und der Putzschicht, wasserdampfdiffüsionsfähig. Da die Dämmplatten aufgrund ihres Materialaufbaus eigenstabil und mechanisch belastbar sind, führt selbst lokale, äußere Druckbeanspruchung auf die Putzschicht nicht zu einer Deformation der Wärmedämmung und daraus resultierender Putzschichtbeschädigung.

Die Wärmedämmplatten werden vorzugsweise mittels Klebemörtel und/oder mittels mechanischer Halteelemente, wie in Wanddübel eingeschraubte Edelstahlschrauben oder gemeinsam mit einem Dübel eingeschlagene Edelstahlnägel, an der Gebäudewand befestigt. Es versteht sich, daß die Wärmedämmplatten dicht an dicht nebeneinander, praktisch unter Vermeidung von Fugen, an einer Gebäudewand befestigt werden. Die maßgenaue Herstellbarkeit und die Formbeständigkeit der Wärmedämmplatten erleichtern diese Zielvorgabe sehr.

Obwohl die Wärmedämmplatten eine praktisch fügenfreie Verkleidung des Gebäudes bilden und bei Temperaturänderung nicht arbeiten und daher eine ideale Grundlage für die Putzschicht bilden, kann es von Fall zu Fall (z. B. Baugebiet mit der Gefahr von Untergrundabsenkungen; alte Gebäude, die nachträglich mit Wärmedämmung versehen werden) günstig sein, zwischen den Wärmedämmplatten und der Putzschicht ein in Spachtelmasse eingebettetes Armierungsgewebe vorzusehen. Dies stellt die dauerhafte Rißfreiheit der Putzschicht sicher. Das Armierungsnetz kann günstigerweise aus Glasseide, mit Kunststoff umhüllter Glasseide oder Kunststoff mit Glasfasergehalt bestehen.

Auch der Klebemörtel und/oder die Spachtelmasse können ein Porenbildungsmittel und/oder einen porösen Zuschlag und/oder ein Wasserabweismittel enthalten. Diese Materialien dienen der Erhöhung der Wärmedämmfähigkeit der erfindungsgemäßen Wärmedämmung insgesamt und der Sicherung der Kapillarwasserdichtigkeit. Die weiter vom im Zusammenhang mit den Wärmedämmplatten angesprochenen, bevorzugten Porenbildungsmittel, porösen Zuschläge und Wasserabweismittel sind auch für das Putzschichtmaterial, den Klebemörtel und die Spachtelmasse bevorzugt.

Das Putzmaterial und/oder der Klebemörtel und/oder die Spachtelmasse können mit einem Faserzusatz, vorzugsweise als Zellulosefasern, Glasfasern oder Polymerfasern, versehen sein. Zellulosefasern verbessern insbesondere die Geschmeidigkeit des Putzmaterials bzw. des Klebemörtels bzw. der Spachtelmasse bei der Verarbeitung, während die anderen genannten Fasern insbesondere die Rißbeständigkiet der Putzschicht bzw. des Klebemörtels bzw. der Spachtelmasse auf Dauer erhöhen. Insbesondere wenn die Putzschicht einen derartigen Faserzusatz enthält, kann ein in Spachtelmasse eingebettetes Armierungsnetz entbehrlich sein.

Die erfindungsgemäße Putzschicht kann gefärbt sein. Zusätzlich oder alternativ kann man auf die Wärmedämmung außenseitig einen Anstrich aus Silikonfarbe vorsehen. Dieser Anstrich verbessert die Kapillar-Wasserdichtigkeit der Wärmedämmung, ohne deren Dampfdiffusionsfähigkeit signifikant zu beeinträchtigen.

Das Putzmateril hat vorzugsweise folgende Trockenausgangszusammensetzung: 15-28 Masse-% hydraulisches Bindemittel, vorzugsweise Zement, 72-85 Masse-% mineralischer Zuschlag und ggf. mineralischer Füllstoff, vorzugsweise Quarzsand und/oder Quarzmehl und/oder Bims und/oder Gesteinssand und/oder Gesteinsmehl, 0-2 Masse-% Zusätze, vorzugsweise Porenbildungsmittel und/oder Wasserabweismittel und/oder Wasserrückhaltemittel und/oder Haftverbeserungsmittel. Der Klebemörtel hat vorzugsweise folgende Trockenausgangszusammensetzung: 15-28 Masse- % hyraulisches Bindemittel, vorzugsweise Zement, 72-85 Masse-% mineralischer Zuschlag und ggf. mineralischer Füllstoff, vorzugweise Quarzsand und/oder Quarzmehl und/oder Gesteinssand und/oder Gesteinsmehl, 0-5 Masse-% Zusätze, vorzugsweise Porenbildungsmittel und/oder Wasserabweismittef und/oder Wasserrückhaltemittel und/oder Haftverbesserungsmittel. Die Spachtelmasse hat vorzugsweise folgende Trockenausgangszusammensetzung: 15-28 Masse-% Bindemittel, vorzugsweise Zement und/oder Baukalk, 72-85 Masse-% mineralischer Zuschlag und ggf. mineralischer Füllstoff, vorzugsweise Quarzsand und/oder Quarzmehl und/oder Bims und/oder Gesteinssand und/oder Gesteinsmehl und/oder geblähtes Perlit, 0-2 Masse-% Zusätze, vorzugsweise Porenbildungsmittel und/oder Wasserabweismittel und/oder Wasserrückhaltemittel und/oder Haftverbesserungsmittel.

Als in den vorstehenden Absätzen genanntes Wasserrückhaltemittel kommt insbesondre Zelluloseether in Betracht; es verhindert, daß Wasser aus der gerade aufgetragenen Lage der Wärmedämmung übermäßig in die darunter befindliche Lage der Wämredämmung gesaugt wird. Als in den vorstehenden Absätzen genanntes Haftverbesserungsmittel kommen insbesondere Kunststoff-Dispersionspulver in Betracht.

Mit der Erfindung wird eine auf der Baustelle gut verarbeitbare, unempfindliche, dauerhafte und unter Feuerschutzgesichtspunkten optimale Wärmedämmung für Gebäude verfügbar gemacht.

Ein bevorzugter Weg zur Herstellung der erfindungsgemäßen Wärmedämmplatten besteht darin, daß die Trockenbestandteile mit Wasser angemischt werden, daß die so entstandene, bildsame Materialmasse in eine oben offene, rahmenartige, meist rechteckige Form gefüllt und oberseitig abgezogen wird, und daß dann der Forminhalt - typischerweise in einem Autoklaven - unter Wärme- und Druckeinwirkung zum Erhärten gebracht wird. Technisch besonders günstig kann dies dadurch erfolgen, daß im Autoklaven durch Erwärmung Wasserdampf durch Verdampfung von Wasser aus der Materialmasse erzeugt und/oder dem Autoklaven Wasserdampf zugeführt wird. Hierbei stellt sich ein erhöhter Druck im Autoklaven ein. Typische Temperaturen beim Erhärten der Wärmedämmplatten sind bis zu 400°C.

Die Erfindung wird nachfolgend anhand bevorzugter Ausführungsbeispiele noch näher erläutert. Es zeigt:
- **Fig. 1**: in einem Vertikalschnitt einen Ausschnitt einer Wärmedämmung;
- **Fig. 2**: im Schnitt einen Ausschnitt einer Wärmedämmplatte;
- **Fig. 3**: im Schnitt einen Ausschnitt einer Wärmedämmplatte anderen Aufbaus;
- **Fig. 4**: im Schnitt einen Ausschnitt einer Wärmedämmplatte wiederum anderen Aufbaus.

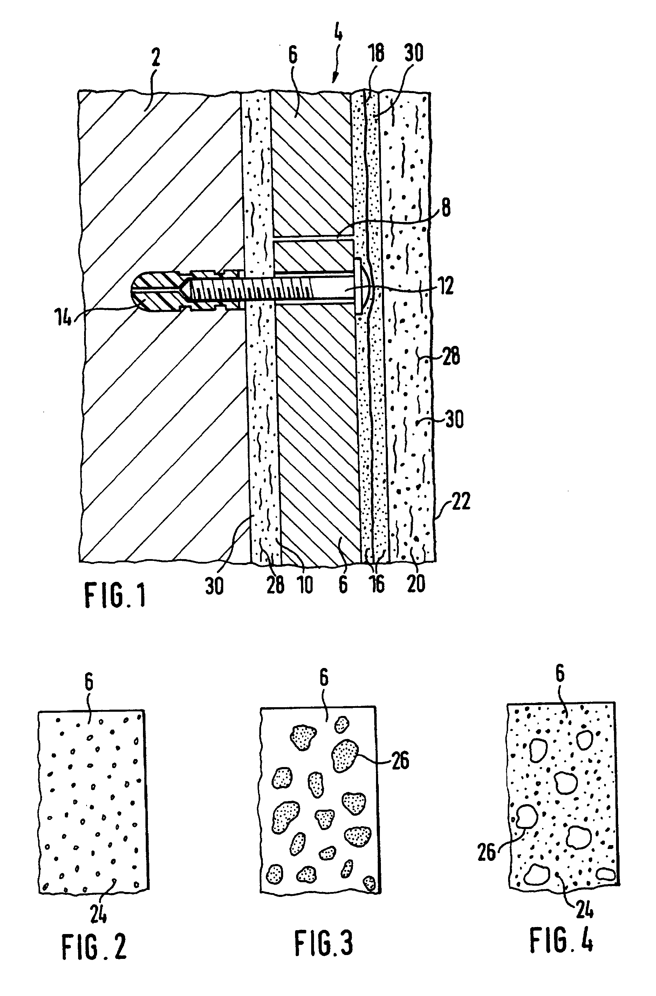

Links in **Fig. 1** ist schematisiert eine Außenmauer 2 eines Gebäudes gezeichnet. Die Außenmauer 2 ist z.B. aus Ziegelsteinen oder Gasbetonsteinen gemauert oder besteht aus Beton. Sie ist nach links hin dicker als der Ausschnitt der **Fig. 1** zeigt und setzt sich nach oben und unten fort. In **Fig. 1** rechts ist auf die Außenseite der Mauer 2 eine aus mehreren Schichten bestehende Wärmedämmung 4 aufgebracht.

Ein erster Hauptbestandteil der Wärmedämmung 4 sind Wärmedämmplatten 6, die nebeneinander und übereinander mit möglichst geringen Fugen 8 an der Mauer 2 angebracht sind. Die Anbringung ist mittels eines Klebemörtels 10 erfolgt. Zusätzlich sind die Wärmedämmplatten 6 mittels Schrauben 12 befestigt, die in Dübel 14 eingeschraubt sind, die in entsprechende Bohrungslöcher der Wand 2 eingesetzt sind. Alternativ kann man mit Nägeln arbeiten, die zusammen mit einem Dübel in ein Wand-Bohrungsloch eingeschlagen werden. Es versteht sich, daß unter dem Schraubenoder Nagelkopf eine großflächige Scheibe sitzt.

Außenseitig auf die Anordnung der Wärmedämmplatten 6 ist eine Spachtelmassenlage 16 mit darin eingebettetem Armierungsnetz 18 aufgebracht. Konkret wird dabei so vorgegangen, daß man zunächst eine erste Lage aus Spachtelmasse auf die Wärmedämmplatten 6 aufbringt, dann das Armierungsnetz darüberspannt, und schließlich eine zweite Lage aus Spachtelmasse aufbringt, so daß das Armierungsnetz 18 in die Spachtelmasse 16 eingebettet ist. Auf die Spachtelmassenlage 16 ist eine Putzschicht 20 aufgebracht, vorzugsweise indem man Frischmörtel mittels einer Putzmaschine aufspritzt. Außen auf der Putzschicht 20 ist eine Farbschicht 22 aus Silikonfarbe aufgetragen.

Die Wärmedämmplatten 6, die Putzschicht 20, der Klebemörtel 10 und die Spachtelmasse 16 haben eine Zusammensetzung, wie sie weiter vorn eingehend beschrieben worden ist.

In **Fig. 2** ist veranschaulicht, wie eine Wärmedämmplatte 6 mit überall fein verteilten Poren 24 aussieht, wie sie sich insbesondere bei Porenbildung durch Wasserdampfbildung und/oder unter Einsatz eines Porenbildungsmittels ergibt.

In **Fig. 3** ist das Aussehen einer Wärmedämmplatte 6 gezeichnet, wie es sich ergibt, wenn ein bei der Herstellung in der Platte 6 verbleibender, poröser Zuschlag verwendet wird. Zeichnerisch angedeutet sind Teilchen 26 z.B. aus geblähtem Perlit, die in sich porös sind. Die Perlitteilchen 26 machen einen beträchtlichen Volumenanteil der Wärmedämmplatte 6 aus.

In **Fig. 4** ist veranschaulicht, wie eine Wärmedämmplatte 6 aussieht, wenn sowohl im Material insgesamt verteilte Poren 24 als auch Teilchen 26 aus in sich porösem Zuschlagstoff vorhanden sind.

In allen Fällen, also Poren 24 unmittelbar im Material der Wärmedämmplatte 6 und/oder Poren innerhalb von porösen Teilchen 26, die in die Wärmedämmplatte 6 eingebettet sind, ergeben sich eine Senkung des spezifischen Gewichts der Platte 6, eine Steigerung der Dampfdiffusionsfähigkeit der Platte 6 und- besonders wichtig - eine Senkung der Wärmeleitfähigkeit der Platte 6.

Es wird darauf hingewiesen, daß sich bei entsprechender Zusammensetzung für den Klebemörtel 10, die Spachtelmassenlage 16 und die Putzschicht 20 im Schnitt Aussehen analog dem in Fig. 2 bis 4 für die Wärmedämmplatte 6 geschilderten Aussehen ergeben.

In **Fig. 1** ist angedeutet, daß der Klebemörtel 10 und das Material der Putzschicht 20 jeweils Fasern 28 enthalten. Außerdem ist durch Punktierung 30 angedeutet, daß der Klebemörtel 10, die Spachtelmasse 16 und das Material der Putzschicht 20 jeweils einen Porenbifdungszusatz enthalten. Es wird nochmals darauf hingewiesen, daß die Fasern 28 und das Armierungsnetz 18 sowie die Spachtelmassenlage 16 in vielen Fällen entbehrlich sind. Für die Verringerung der Wärmeleitfähigkeit der Wärmedämmung 4 sind die Poren in den Wärmedämmplatten 6 von größter Bedeutung, die Poren in der Putzschicht 20 von zweitgrößter Bedeutung und die Poren in dem Klebemörtel 10 und in der Spachtelmasse 16 von relativ geringster Bedeutung.

## Patentansprüche

1. Poren enthaltende Wärmedämmplatte (6), die durch Einbringen einer bildsamen Materialmasse, die Kalkbindemittel, Siliciumdioxid, ggf. porösen Zuschlag, ggf. Zusätze, und Wasser enthält, in eine Form hergestellt ist,
**dadurch gekennzeichnet**,
(a) daß die bildsame Materialmasse folgende Herstellungsausgangszusammensetzung hat:
15 bis 25 Masse - % Kalkbindemittel, bereitgestellt durch gelöschten Kalk und/oder gebrannten Kalk,
50 bis 70 Masse - % Siliciumdioxid,
0 bis 10 Masse - % poröser Zuschlag,
0 bis 2 Masse - % Zusätze,
Rest Wasser;
(b) daß die bildsame Materialmasse ohne Zwischenstufe in die Form eingebracht und unter Wärme- und Druckeinwirkung zum Erhärten gebracht worden ist;
(c) und daß die Wärmedämmplatte (6) entweder ein in der bildsamen Materialmasse enthaltenes Wasserabweismittel und/oder ein oberflächenseitig aufgebrachtes Wasserabweismittel aufweist.

2. Wärmedämmplatte (6) nach Anspruch 1,
**dadurch gekennzeichnet,**
**daß** sie ein spezifisches Gewicht unter 250 kg/m³, vorzugsweise unter 220 kg/m³, höchst vorzugsweise unter 200 kg/m³ hat.

3. Wärmedämmplatte (6) nach Anspruch 1 oder 2,
**dadurch gekennzeichnet,**
**daß** sei einen Wärmeteitfähigkeitsmeßwert unter 0,050 W/mK, vorzugsweise unter 0,045 W/mK, höchst vorzugsweise unter 0,040 W/mK, hat.

4. Wärmedämmplatte (6) nach mindestens einem der Ansprüche 1 bis 3,
**dadurch gekennzeichnet,**
**daß** Poren durch Verdampfen von in der Herstellungsausgangszusammensetzung enthaltenem Wasser und/oder mittels eines Porenbildungsmittels gebildet sind.

5. Wärmedämmplatte (6) nach Anspruch 4,
**dadurch gekennzeichnet,**
**daß** als Porenbildungsmittel mindestens eines der folgenden Mittel vorgesehen ist: Tenside, Aluminiumpulver, Peroxoverbindungen.

6. Wärmedämmplatte (6) nach mindestens einem der Ansprüche 1 bis 5,
**dadurch gekennzeichnet,**
**daß** als poröser Zuschlag mindestens einer der folgenden Stoffe vorgesehen ist: Bims, geblähtes Perlit, Blähton, Blähglimmer, Blähglas, geschäumtes Polystyrol.

7. Wärmedämmplatte (6) nach mindestens einem der Ansprüche 1 bis 6,
**dadurch gekennzeichnet,**
**daß** als Wasserabweismittel mindestens einer der folgenden Mittel vorgesehen ist: Stearate, Oleate, Palmitate, Laurate, Behenate, Silikone.

8. Wärmedämmplatte (6) nach mindestens einem der Ansprüche 1 bis 7,
**dadurch gekennzeichnet,**
**daß** sie eine Größe von mehr als 1 m x 0,4 m hat.

9. Wärmedämmplatte (6) nach mindestens einem der Ansprüche 1 bis 8,
**dadurch gekennzeichnet,**
**daß** sie eine Dicke von 20 bis 100 mm, vorzugsweise 30 bis 50 mm, hat.

10. Wärmedämmung (4) für Gebäude,
**dadurch gekennzeichnet,**
**daß** sie mehrere nebeneinander angebrachte Wärmedämmplatten (6) gemäß mindestens einem der Ansprüche 1 bis 9 aufweist.

11. Wärmedämmung (4) nach Anspruch 10 als außenseitige Wärmedämmung,
**gekennzeichnet durch** mindestens eine Putzschicht (20), die entweder unmittelbar oder unter Vorhandensein mindestens einer Zwischenlage (16; 18) außenseitig auf die Wärmedämmplatten (6) aufgebracht ist, wobei die Putzschicht (20) aus einem mineralischen Putzmaterial besteht, das ein Porenbildungsmittel und/oder einen porösen Zuschlag sowie ein Wasserabweismittel enthält.

12. Wärmedämmung (4) nach Anspruch 10 oder 11,
**dadurch gekennzeichnet,**
**daß** die Wärmedämmplatten (6) mittels Klebemörtels (10) und/oder mechanischer Halteelemente (12) an einer Gebäudewand (2) befestigt sind.

13. Wärmedämmung (4) nach Anspruch 11 oder 12,
**gekennzeichnet durch**
ein in Spachtelmasse (16) eingebettetes Armierungsnetz (18) zwischen den Wärmedämmplatten (6) und der Putzschicht (20).

14. Wärmedämmung (4) nach mindestens einem der Ansprüche 11 bis 13,
**dadurch gekennzeichnet,**
**daß** der Klebemörtel (10) und/oder die Spachtelmasse (16) ein Porenbildungsmittel und/oder einen porösen Zuschlag und/oder ein Wasserabweismittel enthalten.

15. Wärmedämmung (4) nach mindestens einem der Ansprüche 11 bis 14,
**dadurch gekennzeichnet,**
**daß** als Porenbildungsmittel für das Putzmaterial und/oder den Klebemörtel (10) und/oder die Spachtelmasse (16) mindestens eines der folgenden Mittel vorgesehen ist: Tenside, Aluminiumpulver, Peroxoverbindungen.

16. Wärmedämmung (4) nach mindestens einem der Ansprüche 11 bis 15,
**dadurch gekennzeichnet,**
**daß** als poröser Zuschlag für das Putzmaterial und/oder den Klebemörtel (10) und/oder die Spachtelmasse (16) mindestens einer der folgenden Stoffe vorgesehen ist: Bims, geblähtes Perlit, Blähton, Blähglimmer, Blähglas, geschäumtes Polystyrol.

17. Wärmedämmung (4) nach mindestens einem der Ansprüche 11 bis 16,
**dadurch gekennzeichnet,**
**daß** als Wasserabweismittel für das Putzmaterial und/oder den Klebemörtel (10) und/oder die Spachtelmasse (16) mindestens eines der folgenden Mittel vorgesehen ist: Stearate, Oleate, Palminate, Laurate, Behenate, Silikone.

18. Wärmedämmung (4) nach mindestens einem der Ansprüche 11 bis 17,
**dadurch gekennzeichnet,**
**daß** das Putzmaterial und/oder der Klebemörtel (10) und/oder die Spachtelmasse (16) mit einem Faserzusatz (28), vorzugsweise aus Zellulosefasern, Glasfasern oder Polymerfasern, versehen ist.

19. Wärmedämmung (4) nach mindestens einem der Ansprüche 11 bis 18,
**dadurch gekennzeichnet,**
**daß** sie außenseitig mit einem Anstrich aus Silikonfarbe (22) versehen ist.

20. Wärmedämmung (4) nach mindestens einem der Ansprüche 11 bis 19,
**dadurch gekennzeichnet,**
**daß** das Putzmaterial folgende Trockenausgangszusammensetzung hat: 15 bis 28 Masse-% hydraulisches Bindemittel, vorzugsweise Zement, 72 bis 85 Masse-% mineralischer Zuschlag und ggf. mineralischer Füllstoff, vorzugsweise Quarzsand, Quarzmehl, Bims, Gesteinssand, Gesteinsmehl, 0 bis 2 Masse-% Zusätze, vorzugsweise Porenbildungsmittel, Wasserabweismittel, Wasserrückhaltemittel, Haftverbesserungsmittel.

21. Wärmedämmung (4) nach mindestens einem der Ansprüche 11 bis 20,
**dadurch gekennzeichnet,**
**daß** der Klebemörtel folgende Trockenausgangszusammensetzung hat: 15 bis 28 Masse-% hydraulisches Bindemittel, vorzugsweise Zement, 72 bis 85 Masse-% mineralischer Zuschlag und ggf. mineralischer Füllstoff, vorzugsweise Quarzsand, Quarzmehl, Gesteinssand, Gesteinsmehl, 0 bis 5 Masse-% Zusätze, vorzugsweise Porenbildungsmittel, Wasserabweismittel, Wasserrückhaltemittel, Haftverbesserungsmittel.

22. Wärmedämmung (4) nach mindestens einem der Ansprüche 11 bis 21,
**dadurch gekennzeichnet,**
**daß** die Spachtelmasse folgende Trockenausgangszusammensetzung hat: 15 bis 28 Masse-% Bindemittel, vorzugsweise Zement und/oder Baukalk, 72 bis 85 Masse-% mineralischer Zuschlag und ggf. mineralischer Füllstoff, vorzugsweise Quarzsand, Quarzmehl, Bims, Gesteinssand, Gesteinsmehl, geblähtes Perlit, 0 bis 2 Masse-% Zusätze, vorzugsweise Porenbildungsmittel, Wasserabweismittel, Wasserrückhaltemittel, Haftverbesserungsmittel.

## Claims

1. A pore-containing thermal insulation board (6) produced by introducing into a mould a formable material mass containing lime binder, silicon dioxide, optionally porous admixture, optionally additives, and water,
**characterized in**
(a) that the formable material mass has the following initial manufacturing composition:
15 to 25 mass% lime binder provided by quicklime and/or slaked lime,
50 to 70 mass% silicon dioxide,
0 to 10 mass% porous admixture,
0 to 2 mass% additives,
remainder water;
(b) that the formable material mass has been introduced into the mould without intermediate stage and caused to harden unter the influence of heat and water;
(c) and **in that** the thermal insulation board (6) either contains a water-repelling agent contained in the formable material mass and/or a water-repelling agent applied on the surface side.

2. The thermal insulation board (6) of claim 1,
**characterized in that** it has a specific weight below 250 kg/m³, preferably below 220 kg/m³, most preferably below 200 kg/m³.

3. The thermal insulation board (6) of claim 1 or 2,
**characterized in that** it has a thermal conductivity measurement value below 0.050 W/mK, preferably below 0.045 W/mk, most preferably below 0.040 W/mK.

4. The thermal insulation board (6) of at least one of claims 1 to 3,
**characterized in that** pores are formed by evaporating water contained in the initial manufacturing composition and/or by means of a pore-forming agent.

5. The thermal insulation board (6) of claim 4,
**characterized in that** at least one of the following agents is provided as pore-forming agent: tensides, aluminium powder, peroxocompounds.

6. The thermal insulation board (6) of at least one of claims 1 to 5,
**characterized in that** at least one of the following substances is provided as porous admixture: pumice, expanded perlite, expanded clay, expanded mica, expanded glass, foamed polystyrene.

7. The thermal insulation board (6) of at least one of claims 1 to 6,
**characterized in that** at least one of the following agents is provided as water-repelling agent: stearates, oleates, palmitates, laurates, behenates, silicons.

8. The thermal insulation board (6) of at least one of claims 1 to 7,
**characterized in that** it has a size of more than 1 m x 0.4 m.

9. The thermal insulation board (6) of at least one of claims 1 to 8,
**characterized in that** it has a thickness from 20 to 100 mm, preferably 30 to 50 mm.

10. A thermal insulation (4) for buildings,
**characterized in that** it comprises a plurality of thermal insulation boards (6) according to at least one of claims 1 to 9 attached in juxtaposed manner.

11. The thermal insulation (4) of claim 10 as an outside thermal insulation,
**characterized by** at least one plaster layer (20) applied onto the outside of the thermal insulation boards (6) either directly or via at least one intermediate layer (16; 18), the plaster layer (20) consisting of a mineral plaster material containing a pore-forming agent and/or a porous admixture as well as a water-repelling agent.

12. The thermal insulation (4) of claim 10 or 11,
**characterized in that** the thermal insulation boards (6) are secured to a building wall (2) using adhesive mortar (10) and/or mechanical retaining members (12).

13. The thermal insulation (4) of claim 11 or 12,
**characterized by** a reinforcing netting (18) embedded in a filler (16) and provided between the thermal insulation boards (6) and the plaster layer (20).

14. The termal insulation (4) of at least one of claims 11 to 13,
**characterized in that** the adhesive mortar (10) and/or the filler (16) contain a pore-forming agent and/or a porous admixture and/or a water-repelling agent.

15. The thermal insulation (4) of at least one of claims 11 to 14,
**characterized in that** at least one of the following agents is provided as pore-forming agent for the plaster material and/or the adhesive mortar (10) and/or the filler (16): tensides, aluminium powder, peroxocompounds.

16. The thermal insulation (4) of at least one of claims 11 to 15,
**characterized in that** at least one of the following substances is provided as porous admixture for the plaster material and/or the adhesive mortar (10) and/or the filler (16): pumice, expanded perlite, expanded clay, expanded mica, expanded glass, foamed polystyrene.

17. The thermal insulation (4) of at least one of claims 11 to 16,
**characterized in that** at least one of the following agents is provided as water-repelling agent for the plaster material and/or the adhesive mortar (10) and/or the filler: stearates, oleates, palmitates, laurates, behenates, silicons.

18. The thermal insulation (4) of at least one of claims 11 to 17,
**characterized in that** the plaster material and/or the adhesive mortar (10) and/or the filler (16) is provided with a fibre additive (28), preferably of cellulose fibres, glass fibres or polymer fibres.

19. The thermal insulation (4) of at least one of claims 11 to 18,
**characterized in that** it is provided on the outside with a coat of silicon paint (22).

20. The thermal insulation (4) of at least one of claims 11 to 19,
**characterized in that** the plaster material has the following initial dry composition: 15 to 28 mass% hydraulic binder, preferably cement, 72 to 85 mass% mineral admixture and optionally mineral filling agent, preferably quartz sand, quartz powder, pumice, mineral sand, mineral powder, 0 to 2 mass% additives, preferably pore-forming agents, water-repelling agents, water-retaining agents, adhesion promoters.

21. The thermal insulation (4) of at least one of claims 11 to 20,
**characterized in that** the adhesive mortar has the following initial dry composition: 15 to 28 mass% hydraulic binder, preferably cement, 72 to 85 mass% mineral admixture and optionally mineral filling agent, preferably quartz sand, quartz powder, mineral sand, mineral powder, 0 to 5 mass% additives, preferably pore-forming agents, water-repelling agents, water-retaining agents, adhesion promoters.

22. The thermal insulation (4) of at least one of claims 11 to 21,
**characterized in that** the filler has the following initial dry composition: 15 to 28 mass% binder, preferably cement and/or construction lime, 72 to 85 mass% mineral admixture and optionally mineral filling agent, preferably quartz sand, quartz powder, pumice, mineral sand, mineral powder, expanded perlite, 0 to 2 mass% additives, preferably pore-forming agents, water-repelling agents, water-retaining agents, adhesion promoters.

## Revendications

1. Plaque d'isolation thermique contenant des pores (6), qui est fabriquée par introduction dans un moule d'une masse de matériau plastique, qui contient un liant de chaux, du dioxyde de silicium, éventuellement un granulat poreux, éventuellement des additifs, et de l'eau, **caractérisée**
(a) en ce que la masse de matériau plastique a la composition initiale de fabrication suivante :
15 à 25 % en masse de liant de chaux, mis à disposition par chaux vive et/ou chaux éteinte,
50 à 70 % en masse de dioxyde de silicium,
0 à 10 % en masse de granulat poreux,
0 à 2 % en masse d'additifs,
le reste étant de l'eau ;
(b) en ce que la masse de matériau plastique a été introduite dans le moule sans étape intermédiaire et a été amenée à durcir sous l'action de la chaleur et de la pression,
(c) et en ce que la plaque d'isolation thermique (6) comporte un agent hydrofuge contenu dans la masse de matériau plastique et/ou un agent hydrofuge appliqué superficiellement.

2. Plaque d'isolation thermique (6) selon la revendication 1, **caractérisée en ce qu'**elle a une masse spécifique inférieure à 250 kg/m³ , de préférence inférieure à 200 kg/m³, de manière particulièrement préférée inférieure à 200 kg/m³.

3. Plaque d'isolation thermique (6) selon la revendication 1 ou 2, **caractérisée en ce qu'**elle a une valeur mesurée de la conductivité thermique inférieure à 0,050 W/mK, de préférence inférieure à 0,045 W/mK, de manière particulièrement préférée inférieure à 0,040 W/mK.

4. Plaque d'isolation thermique (6) selon au moins l'une des revendications 1 à 3, **caractérisée en ce que** les pores sont formés par évaporation de l'eau contenue dans la composition initiale de fabrication et/ou au moyen d'un agent porogène.

5. Plaque d'isolation thermique (6) selon la revendication 4, **caractérisée en ce qu'**au moins l'un des agents suivants : tensioactifs, poudre d'aluminium, composés peroxo est prévu comme agent porogène.

6. Plaque d'isolation thermique (6) selon au moins l'une des revendications 1 à 5, **caractérisée en ce qu'**au moins l'une des substances suivantes : pierre ponce, perlite expansée, argile expansée, mica expansé, verre expansé, polystyrène expansé est prévue comme granulat poreux.

7. Plaque d'isolation thermique (6) selon au moins l'une des revendications 1 à 6, **caractérisée en ce qu'**au moins l'un des agents suivants : stéarates, oléates, palmitates, laurates, béhénates, silicones est prévu comme agent hydrofuge.

8. Plaque d'isolation thermique (6) selon au moins l'une des revendications 1 à 7, **caractérisée en ce qu'**elle a une taille supérieure à 1 m x 0,4 m.

9. Plaque d'isolation thermique (6) selon au moins l'une des revendications 1 à 8, **caractérisée en ce qu'**elle a une épaisseur de 20 à 100 mm, de préférence de 30 à 50 mm.

10. Isolation thermique (4) pour bâtiments, **caractérisée en ce qu'**elle comporte plusieurs plaques d'isolation thermique (6) selon au moins l'une des revendications 1 à 9 appliquées côte à côte.

11. Isolation thermique (4) selon la revendication 10 sous forme d'isolation thermique extérieure, **caractérisée par** au moins une couche d'enduit (20) qui est appliquée du côté extérieur sur les plaques d'isolation thermique (6) directement ou en présence d'au moins une couche intermédiaire (16 ; 18), la couche d'enduit (20) consistant en un matériau d'enduit minéral qui contient un agent porogène et/ou un granulat poreux ainsi qu'un agent hydrofuge.

12. Isolation thermique (4) selon la revendication 10 ou 11, **caractérisée en ce que** les plaques d'isolation thermique (6) sont fixées sur un mur de bâtiment (2) au moyen d'un mortier adhésif (10) et/ou d'éléments de maintien mécaniques (12).

13. Isolation thermique (4) selon la revendication 11 ou 12, **caractérisée par** un treillis d'armature (18) inclus dans un mastic (16) entre les plaques d'isolation thermique (6) et la couche d'enduit (20).

14. Isolation thermique (4) selon au moins l'une des revendications 11 à 13, **caractérisée en ce que** le mortier adhésif (10) et/ou le mastic (16) contiennent un agent porogène et/ou un granulat poreux et/ou un agent hydrofuge.

15. Isolation thermique (4) selon au moins l'une des revendications 11 à 14, **caractérisée en ce qu'**au moins l'un des agents suivants : tensioactifs, poudre d'aluminium, composés peroxo est prévu comme agent porogène pour l'enduit et/ou le mortier adhésif (10) et/ou le mastic (16).

16. Isolation thermique (4) selon au moins l'une des revendications 11 à 15, **caractérisée en ce qu'**au moins l'une des substances suivantes : pierre ponce, perlite expansée, argile expansée, mica expansé, verre expansé, polystyrène expansé est prévue comme granulat poreux pour l'enduit et/ou le mortier adhésif (10) et/ou le mastic (16).

17. Isolation thermique (4) selon au moins l'une des revendications 11 à 16, **caractérisée en ce qu'**au moins l'un des agents suivants stéarates, oléates, palmitates, laurates, béhénates, silicones est prévu comme agent hydrofuge pour l'enduit et/ou le mortier adhésif (10) et/ou le mastic (16).

18. Isolation thermique (4) selon au moins l'une des revendications 11 à 17, **caractérisée en ce que** l'enduit et/ou le mortier adhésif (10) et/ou le mastic (16) sont munis d'un additif fibreux (28) de préférence constitué par des fibres cellulosiques, des fibres de verre ou des fibres polymères.

19. Isolation thermique (4) selon au moins l'une des revendications 11 à 18, **caractérisée en ce qu'**elle est munie extérieurement d'une couche de peinture de silicone (22).

20. Isolation thermique (4) selon au moins l'une des revendications 11 à 19, **caractérisée en ce que** l'enduit a la composition initiale sèche suivante : 15 à 28 % en masse de liant hydraulique, de préférence du ciment, 72 à 85 % en masse de granulat minéral et éventuellement de charge minérale, préférence du sable de quartz, de la poudre de quartz, de la pierre ponce, du sable de roche, de la poudre de roche, 0 à 2 % en masse d'additifs, de préférence un agent porogène, un agent hydrofuge, un agent retenant l'eau, un agent améliorant l'adhésion.

21. Isolation thermique (4) selon au moins l'une des revendications 11 à 20, **caractérisée en ce que** le mortier adhésif a la composition initiale sèche suivante 15 à 28 % en masse de liant hydraulique, de préférence du ciment, 72 à 85 % en masse de granulat minéral et éventuellement de charge minérale, de préférence du sable de quartz, de la poudre de quartz, du sable de roche, de la poudre de roche, 0 à 5 % en masse d'additifs, de préférence un agent porogène, un agent hydrofuge, un agent retenant l'eau, un agent améliorant l'adhésion.

22. Isolation thermique (4) selon au moins l'une des revendications 11 à 21, **caractérisée en ce que** le mastic a la composition initiale sèche suivante : 15 à 28 % en masse de liant, de préférence du ciment et/ou de la chaux de construction, 72 à 85 % en masse de granulat minéral et éventuellement de charge minérale, de préférence du sable de quartz, de la poudre de quartz, de la pierre ponce, du sable de roche, de la poudre de roche, de la perlite expansée, 0 à 2 % en masse d'additifs, de préférence un agent porogène, un agent hydrofuge, un agent retenant l'eau, un agent améliorant l'adhésion.
